# EUROPÄISCHE PATENTSCHRIFT

(11) **EP 2 377 668 B1**
(45) Veröffentlichungstag und Bekanntmachung des Hinweises auf die Patenterteilung: **16.03.2016**
(21) Anmeldenummer: 11158759.8
(22) Anmeldetag: 18.03.2011
(51) Int. Cl.: B29C 49/64, B29C 35/08, B29B 13/04

(54) **Strahlerkühlung, Heizmodul und Verfahren zur Strahlerkühlung**
Cooler of emitter, heating module and process of cooling of emitter
Refroidissement d'émetteur de rayonnement, module chauffant et procédé de refroidissement d'émetteur de rayonnement

(30) Priorität: 14.04.2010 DE 102010015018
(43) Veröffentlichungstag der Anmeldung: 19.10.2011
(73) Patentinhaber: Krones AG, 93073 Neutraubling (DE)
(72) Erfinder: Schönberger, Wolfgang, 93073 Neutraubling (DE); Holzer, Christian, 93073 Neutraubling (DE); Fischer, Simon, 93073 Neutraubling (DE)
(74) Vertreter: Benninger, Johannes

(56) Entgegenhaltungen:
- DE-A1- 3 510 241
- DE-A1- 10 145 456
- DE-A1-102007 031 210
- US-A1- 2007 085 243
- US-B1- 6 632 087

## Beschreibung

Die vorliegende Erfindung betrifft ein Verfahren zum Kühlen von Infrarotstrahlern, ein Heizmodul für Vorformlinge und eine Strahlerkühlung gemäß den Merkmalen des Oberbegriffes der Ansprüche 1, 9 und 14.

Bei der Herstellung von Kunststoffflaschen werden so genannte Vorformlinge aus thermoelastischem Material, beispielsweise PET, verwendet. Diese werden erwärmt und in Streckblasmaschinen in die gewünschte Form gebracht. Insbesondere werden die Vorformlinge in den Streckblasmaschinen in einer Förderstrecke durch eine Heizeinrichtung gefördert, ehe sie in der Blasstation verarbeitet werden.

Beim derzeitigen Standard-Prozess werden Vorformlinge im Heizmodul von einer Spindel gehalten, die drehbar in einem Kettenglied gelagert ist. Im Heizmodul werden mehrere Kettenglieder mit den darin gelagerten Spindeln verbunden und bilden eine endlos umlaufende Kette. An der außen liegenden Seite der geraden Längsseiten des Ofens befinden sich Heizeinrichtungen, die dem Vorformling mittels IR-Strahlung Wärme zuführen. An der Innenseite und am Boden sind Reflektoren angebracht, um die ausgestrahlte IR-Strahlung möglichst gut auszunutzen. Durch Schlitze in den, der Heizeinrichtungen gegenüberliegenden Reflektoren, wird über Lufteinblasung eine Oberflächenkühlung zur Vermeidung von Verbrennungen der Oberfläche des Vorformlings erreicht.

Durch ständig steigende Energiepreise wird ein möglichst hoher Wirkungsgrad von Maschinen und Anlagen immer wichtiger. Es ist bekannt, dass sich eine konsequente Verengung des Heiztunnels positiv auf die Energieeffizienz des Vorformling- Aufheizprozesses auswirkt.

Der Nachteil dabei ist jedoch, dass aufgrund der engeren Anordnung die Lampenkolbentemperaturen dabei sehr hoch ansteigen. Diese können dann bis zu ihren Grenztemperaturen von ca. 900°C oder/ und darüber liegen. Die Folge daraus sind vorzeitige Lampenausfälle bzw. verringerte Lampenlebensdauern. Deshalb wird versucht, die Strahlertemperatur zu kühlen.

DE 20 020 150 U1 beschreibt eine Erwärmungsstrecke zum Streckblasen mit Infrarot- Strahlungsquellen, bei denen der Gegenreflektor Kühlflächen aufweist und / oder aktiv gekühlt ist.

DE 35 10 241 A1, die die Merkmale der Ansprüche 1, 8, 13 offenbart, offenbart eine Heizvorrichtung, bei der ein Ventilator Frischluft auf die Anschlüsse und die Rückseiten der Infrarotstrahler bläst, um diese abzukühlen und somit deren Lebensdauer zu verlängern.

DE 600 30 327 T2 zeigt, dass Infrarotstrahler mittels eines Luftstroms gekühlt werden. Der Luftstrom trifft erst auf die Oberfläche der Vorformlinge und strömt durch geeignete Öffnungen auf die Strahler und deren Fassungen zu.

Das Ziel dieser Erfindung besteht darin, eine verbesserte energieeffiziente Strahlerkühlung zu realisieren und dadurch eine Optimierung der Heizenergie auch auf Dauer zu erreichen.

Die obige Aufgabe wird durch ein Verfahren und eine Vorrichtung gelöst, die die Merkmale des Patentanspruchs 1, 9 und 14 umfassen. Weitere vorteilhafte Ausgestaltungen werden durch die Unteransprüche beschrieben.

Die Erfindung betrifft ein Verfahren zur Kühlung von IR- Strahlern in einem Heizmodul zur Erwärmung von Vorformlingen. Ein solches Heizmodul wird in Verbindung mit einer Streckblasvorrichtung verwendet, um die Vorformlinge auf die für das Streckblasverfahren benötigte Temperatur zu bringen. An mindestens einer Seitenwand des Heizmoduls sind IR- Strahler parallel zur Transportrichtung der Vorformlinge angeordnet. Hinter den Strahlern - auf deren den Vorformlingen abgewandten Seite - befindet sich mindestens ein Rückenreflektor.

Werden die IR- Lampen sehr heiß gefahren und / oder der Abstand zwischen den IR- Strahlern und dem Rückenreflektor verringert, kann die Energieeffizienz verbessert werden. Allerdings wirkt sich dies in einer schnelleren Schädigung bzw. einem höheren Verschleiß der Strahler aus.

Um dieses Problem zu lösen, wird erfindungsmäßig eine sog. Lampenkühlung vorgesehen. Dabei wird mit einem Kühl- Luftstrom der Lampenkolben und / oder die Lampenenden hinter- bzw. umspült. Somit kann die Lampentemperatur auf ein verträgliches Maß reduziert und eine hohe Lebensdauer sichergestellt werden.

Die zu erwärmenden Vorformlinge weisen einen Mündungsbereich und eine Längsachse auf. Damit der Mündungsbereich beim nachfolgenden Streckblasen in die gewünschte Behälterform nicht deformiert und somit unbrauchbar wird, muss dieser Bereich während des Erwärmungsprozesses geschützt werden. Dies geschieht vorzugsweise durch Kühlung des Mündungsbereiches mit einem ersten Kühlmittelstrom, der auch allgemein als Mündungs- Kühlung bezeichnet wird.

Erfindungsgemäß verläuft zwischen den IR- Strahlern und dem mindestens einen Rückenreflektor ein zweiter Kühlmittelstrom. Dieser - auch als Strahlungskühlung bezeichnete zweite Kühlmittelstrom - verläuft vertikal, während der erste Kühlmittelstrom horizontal verläuft. Der zweite Kühlmittelstrom wird zumindest teilweise von dem ersten verlaufenden Kühlmittelstrom gespeist und / oder vereinigt sich mit diesem. Der zweite Kühlmittelstrom hinterspült somit die IR- Strahler und kühlt diese.

Der zweite Kühlmittelstrom verläuft parallel zur Längsachse der Vorformlinge.

Gemäß einer bevorzugten Ausführungsform der Erfindung wird der zweite Kühlmittelstrom durch einen Kühlstromerzeuger erzeugt. Der Kühlstromerzeuger ist so angeordnet, dass die Bewegungsrichtung der Strahlungskühlung parallel zur Längsachse der Vorformlinge in Richtung Mündungsbereich der Vorformlinge verläuft. Vorzugsweise ist der Kühlstromerzeuger unterhalb der IR- Strahler angeordnet und bläst den Kühlstrom zwischen den IR- Strahlern und dem Rückenreflektor nach oben.

Der erste und der zweite Kühlmittelstrom vereinigen sich oberhalb der Anordnung der IR- Strahler. Gemäß einer bevorzugten Ausführungsform weist der erste Kühlmittelstrom eine höhere Geschwindigkeit als der zweite Kühlmittelstrom auf. Dadurch entsteht eine Sogwirkung, die die Ableitung des zweiten Kühlmittelstroms nach oben hin weiterhin unterstützt, d.h. die Luftabfuhr des zweiten Kühlmittelstroms begünstigt. Dadurch kann die Temperatur des Strahlers merklich gesenkt werden. Beispielsweise konnte gezeigt werden, dass mit dieser Maßnahme die Temperatur der Strahler um ungefähr 200°C gesenkt werden kann.

Gemäß einer weiteren bevorzugten Ausführungsform der Erfindung wird der zweite Kühlmittelstrom erzeugt, indem zumindest ein Teil des ersten Kühlmittelstroms zur Kühlung des Mündungsbereiches der Vorformlinge abgezweigt und abgeleitet wird. Der abgezweigte und abgeleitete Kühlmittelstrom wird zwischen die IR- Strahler und den Rückenreflektor gelenkt und verläuft somit antiparallel zu der in Richtung Mündungsbereich der Vorformlinge verlaufenden Längsachse der Vorformlinge. Mit Hilfe dieses abgezweigten und abgeleiteten Kühlmittelstrom werden die IR- Strahler ebenfalls hinterspült.

Mit dem erfindungsgemäßen Verfahren können die Strahlerenden und / oder die Strahlerkolben hinterspült werden. Gemäß einer weiteren Ausführungsform kann der Kühlstrom bei einem Strahler mit Doppelglaskolben auch zwischen den beiden Glasoberflächen durch geleitet werden.

Die verbesserte Energieeffizienz insbesondere durch die Strahlerkolbenkühlung lässt sich aus dem Stefan Boltzmann Gesetz herleiten. Allgemein gilt für die Strahler: je heißer die Wendel, desto besser ist der Strahler. Verringert man nunmehr durch aktive Kühlung die Temperatur des Lampenkolbens, kann man dementsprechend die Wendel heißer fahren. Da sich gemäß dem Stefan Boltzmann Gesetz P = σ • A • T⁴ (wobei P = Strahlungsleistung; σ = Boltzmann Konstante; A = Fläche des Körpers und T = absolute Temperatur) die Strahlungsleistung eines Körpers proportional zur vierten Potenz seiner absoluten Temperatur ändert, kann somit eine massive Leistungssteigerung erzielt werden.

Die Erfindung betrifft weiterhin ein Heizmodul, das geeignete Vorrichtungen aufweist, um das beschriebene Verfahren anzuwenden. Insbesondere weist das Heizmodul ein Mittel zur Erzeugung eines parallel oder antiparallel zur Längsachse der Vorformlinge verlaufenden zweiten Kühlmittelstroms auf, wobei der zweiten Kühlmittelstrom zwischen den IR- Strahlern und dem mindestens einen Rückenreflektor verläuft.

Erfindungsgemäß ist der zweite Kühlmittelstrom zumindest teilweise vom ersten Kühlmittelstrom abteilbar und / oder mit diesem vereinigbar.

Gemäß einer bevorzugten Ausführungsform weist das Heizmodul ein Kühlschild auf, das spezielle Luftleitvorrichtungen und mindesten einen Öffnungsschlitz aufweist. Mit Hilfe der Luftleitvorrichtungen wird zumindest ein Teil der Mündungskühlung nach unten abgelenkt und trifft durch den Öffnungsschlitz auf die IR- Strahler bzw. wird in den Zwischenraum zwischen IR- Strahler und Rückenreflektor geleitet.

Gemäß einer anderen bevorzugten Ausführungsform umfasst das Heizmodul ein Kühlstromerzeuger, der bereits im Rahmen des Verfahrens ausführlich beschrieben wurde. Bei dem Kühlstromerzeuger kann es sich beispielsweise um einen Ventilator, ein Gebläse, ein Drucklufterzeuger oder ein anderes geeignetes Mittel handeln.

Weiterhin betrifft die Erfindung eine Strahlerkühlung zur Verwendung in einem oben beschriebenen Heizmodul, wobei die Strahlerkühlung ein zwischen den IR-Strahlern und dem mindestens einen Rückenreflektor angeordneter zweiter Kühlmittelstrom ist, der zumindest teilweise vom ersten Kühlmittelstrom abteilbar und / oder mit diesem vereinigbar ist.

Die Erfindung ist grundsätzlich zur Anwendung in Mikrowelleriöfen, Rundläuferöfen, Linearöfen, stationären Öfen etc. geeignet. Weiterhin ist die Verwendung von individuellen Heiztaschen denkbar, wobei jeder Vorformling in einer separaten Heiztasche selektiv temperiert wird.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
- Figur 1: zeigt eine schematische Ansicht eines Heizmoduls zur Erwärmung von Vorformlingen (Stand der Technik).
- Figur 2: zeigt eine Ansicht einer Lampenkühlung in einem Heizmodul (Stand der Technik).
- Figur 3: zeigt eine erste Ausführungsform einer Lampenkühlung.
- Figur 4: zeigt eine perspektivische Darstellung eines Kühlschilds mit Luftleitern.
- Figur 5: zeigt eine weitere Darstellung eines Kühlschilds mit Luftleitern.
- Figur 6: zeigt einen Heizkasten mit Kühlschild.
- Figur 7: zeigt eine zweite Ausführungsform einer Lampenkühlung.
- Figur 8: zeigt die Sogwirkung bei der zweiten Ausführungsform einer Lampenkühlung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

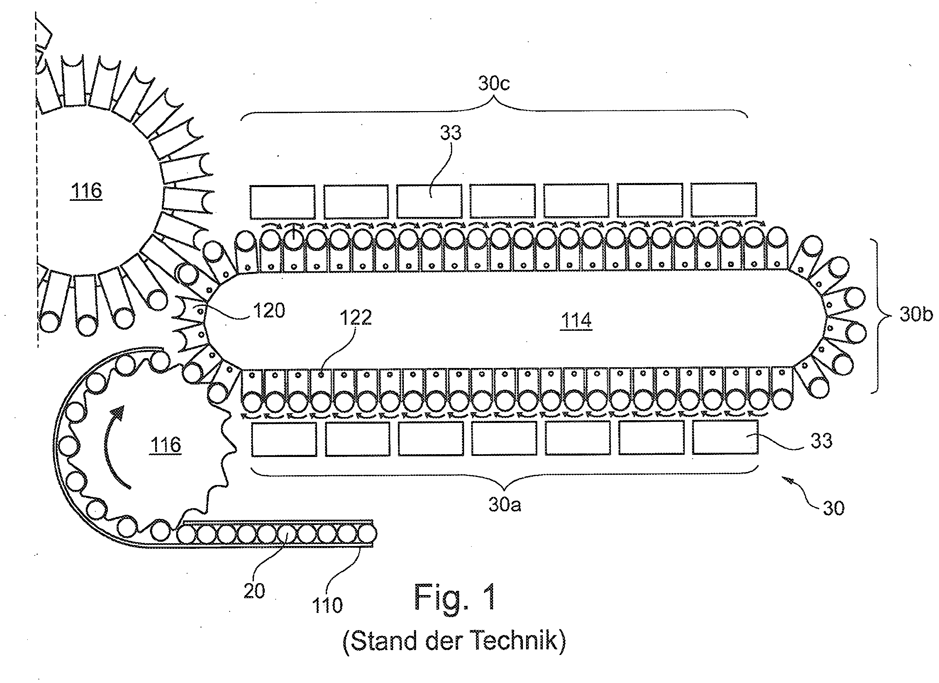

**Figur 1** zeigt eine schematische Ansicht eines Heizmoduls 30 zur Erwärmung von Vorformlingen 20. Die Vorformlinge 20 werden über ein Transportmittel 110 angeliefert, mittels eines Sägezahnsterns 112 auf Teilung gebracht und in den Ofen bzw. das Heizmodul 30 eingegeben.

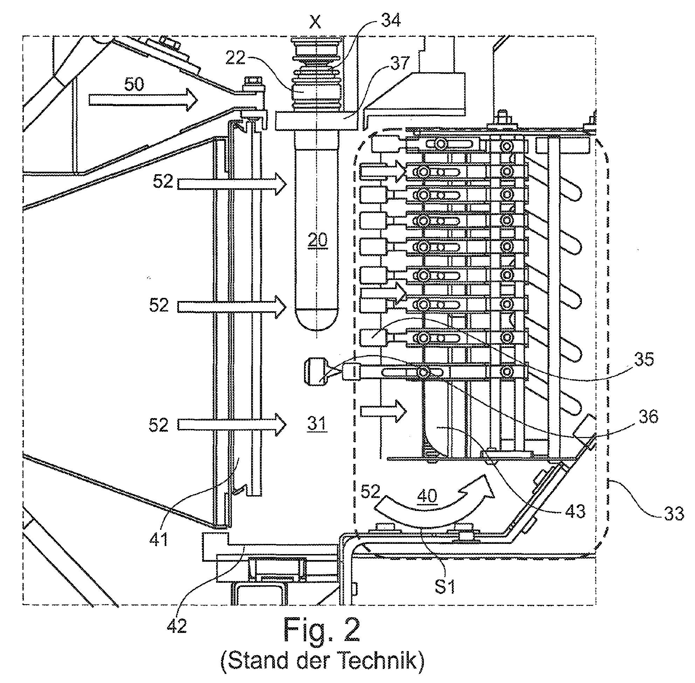

Insbesondere werden die Vorformlinge 20 an eine umlaufende Transportvorrichtung 114 übergeben, die die Vorformlinge 20 durch den Ofen 30 transportiert. Beispielsweise werden die Vorformlinge 20 durch Greifer oder Halter 120 an einer umlaufenden endlosen Transportkette 122 aufgenommen. Die Vorformlinge 20 durchlaufen zunächst eine lineare Heizstrecke 30a, in der sie beim Durchlaufen von so genannten Heizkästen 33 (vgl. Figur 2), in denen IR- Strahler angeordnet sind, gleichmäßig rundum erwärmt werden. Nach einem Umlenkbereich 30b am Ende des Ofens 30 werden sie in einer zweiten geraden Heizstrecke 30c zurückgeführt und auf endgültige Temperatur gebracht. In den Heizkästen 33 sind weiterhin Reflektoren angebracht, um Strahlungsverluste so gering wie möglich zu halten. Somit wird die von den Heizstrahlern abgegebene Strahlung, die nicht in die Vorformlinge 20 eingeht, von den Reflektoren zurückgeworfen und geht nicht komplett verloren.

Während die Vorformlinge 20 den Ofen 30 durchlaufen, werden sie vorzugsweise gedreht, um eine gleichmäßige Erwärmung von allen Seiten zu gewährleisten.

Anschließend werden die erwärmten Vorformlinge 20 beispielsweise an einen Auslaufstern 116 übergeben und einem Streckblasmodul zugeführt.

**Figur 2** zeigt eine Ansicht einer Lampenkühlung gemäß dem Stand der Technik. Insbesondere ist eine Heizgasse 31 aus einem linearen Bereich 30a, 30c des Heizmoduls 30 (vgl. **Figur 1**) dargestellt. Der an einer Halterung 34 gehalterte Vorformling 20 wird vorzugsweise drehend durch eine Heizgasse 31 transportiert. Damit der Vorformling 20 nicht zu heiß wird und gegebenenfalls schmilzt, muss wiederum kühlende Luft oder ein anderes geeignetes Kühlmittel zugeführt werden. Besonders der Mündungsbereich 22 der Vorformlinge 20 darf nicht durch übermäßiges Erhitzen deformiert werden. Aus diesem Grund werden die Vorformlinge mit einem Mündungs- Kühlstrom 50 und mindestens einem Oberflächen- Kühlstrom 52 beaufschlagt. Zusätzlich wird der Mündungsbereich 22 durch eine Schirmplatte 37 vor direkter Strahlung abgeschirmt.

Die IR- Strahler 35 sind in einem so genannten Heizkasten 33 angeordnet. Insbesondere sind die IR- Strahler 35 so angeordnet, dass der Vorformling 20 gleichmäßig über seine gesamte Höhe bestrahlt und erwärmt wird. Weiterhin kann ein Bodenstrahler 36 im unteren Bereich der Heizgasse 31 angeordnet sein, der den Vorformling 20 von unten her anstrahlt.

Um die Strahlung der Heizstrahler 35, 36 optimal auszunutzen, sind in der Heizgasse 31 Reflektoren angeordnet, insbesondere ein Gegenreflektor 41, auf der hinter dem Vorformling 20 den Strahlern 35 gegenüberliegenden Seite, ein Bodenreflektor 42 und ein Rückenreflektor 43, der hinter den Strahlern 35 angeordnet ist und somit die Strahlung zurückwirft, die ansonsten für die Erwärmung der Vorformlinge 20 nicht genutzt werden könnte.

Die IR- Strahler 35, 36 dürfen eine Temperatur von ca. 900°C nicht überschreiten. Es muss also dafür gesorgt werden, dass diese ausreichend gekühlt werden:
Zur Lampenkühlung wird derzeit der Oberflächen- Kühlstrom 52 genutzt. Es wird über einen Ventilator durch Schlitze im Gegenreflektor 41 Kaltluft 52 in die Heizgasse 31, innerhalb derer die Vorformlinge 20 transportiert werden, geblasen. Diese Kaltluft 52 kühlt die Oberfläche der Vorformlinge 20 und verhindert somit ein Verbrennen derselben. Die Luft 52 strömt zwischen den Vorformlinge 20 hindurch in Richtung der Strahler 35, 36 und kühlt diese somit, da die Temperatur der Strahler 35, 36 deutlich höher ist als die der Kühlluft 52. Der Oberflächen- Kühlstrom 52 ist nun schon ziemlich stark erwärmt und bricht sich am Rückenreflektor 43. Über Sogwirkung S1 wird ein Teil dieser Luft 52 durch eine Freilegung / Öffnung 40 im unteren Bereich des Heizkastens 33 abgeführt. Jedoch ist die Sogwirkung S1 vor allem im oberen Bereich des Heizkastens 33 nicht ausreichend und somit wird die Luft 52 nicht mehr optimal abgeführt und insbesondere die Temperatur der oberen Strahler 35 steigt an.

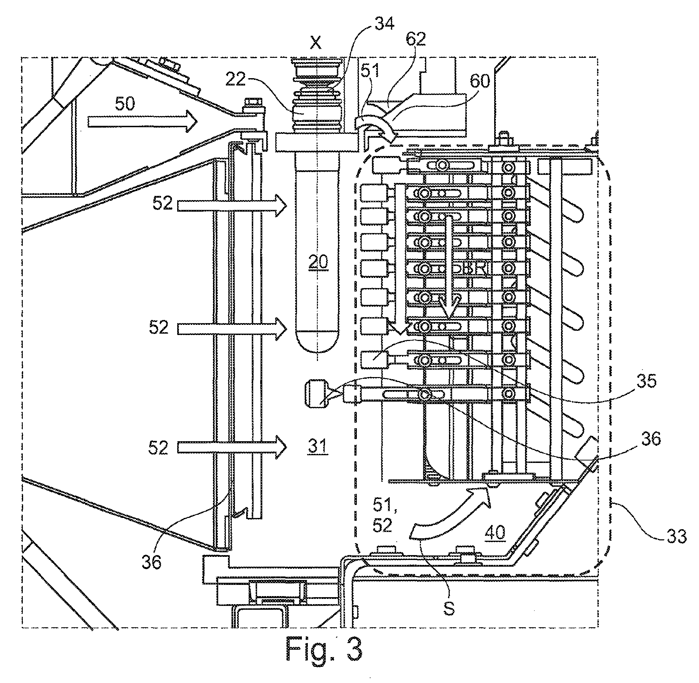

**Figur 3** zeigt eine erste Ausführungsform einer Lampenkühlung. Hierzu soll insbesondere und / oder zusätzlich der Mündungs- Kühlstrom 50 zur Kühlung der Strahler 35 genutzt werden. Die Mündungskühlung 50 befindet sich über der Oberflächenkühlung 52 und bläst kalte Luft 50 direkt auf das Gewinde / den Mündungsbereich 22 der Vorformlinge 20. Über ein Kühlschild 60 mit mindestens einem Luftleiter 62 wird nun ein Teil dieses Mündungs- Kühlstroms 50 abgezweigt und nach unten gelenkt. Der abgezweigte Kühlstrom 51 dient als Strahler- Kühlmittelstrom 51 und strömt hinter den Strahlern 35 in Bewegungsrichtung BR nach unten, so dass diese hinterspült werden. Dadurch werden die Strahler 35 aktiv gekühlt. Weiterhin wird auch die sich hinter den Strahlern 35 befindliche Luft optimal nach unten abtransportiert. Dadurch wird ein Luftpolster aus heißer Luft hinter den Strahlern 35 vermieden, wodurch eine deutlich bessere Kühlung der Strahler 35 erreicht werden kann.

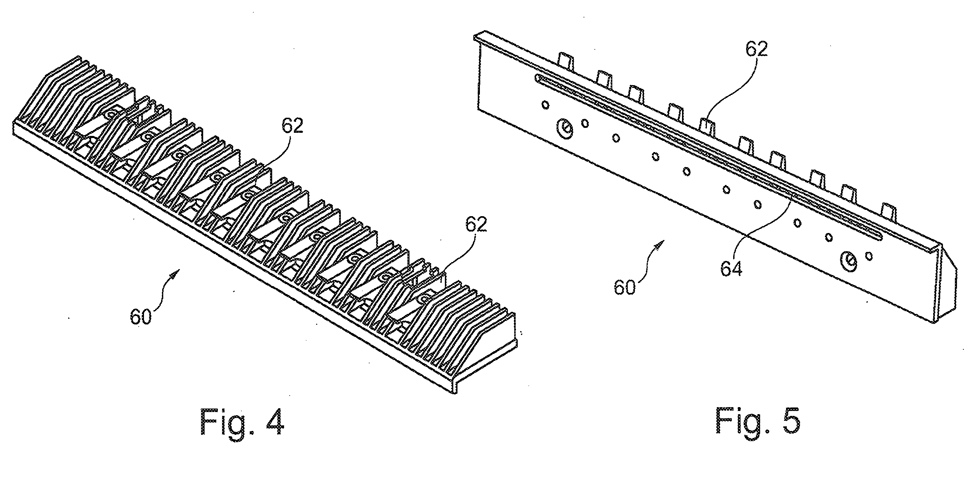

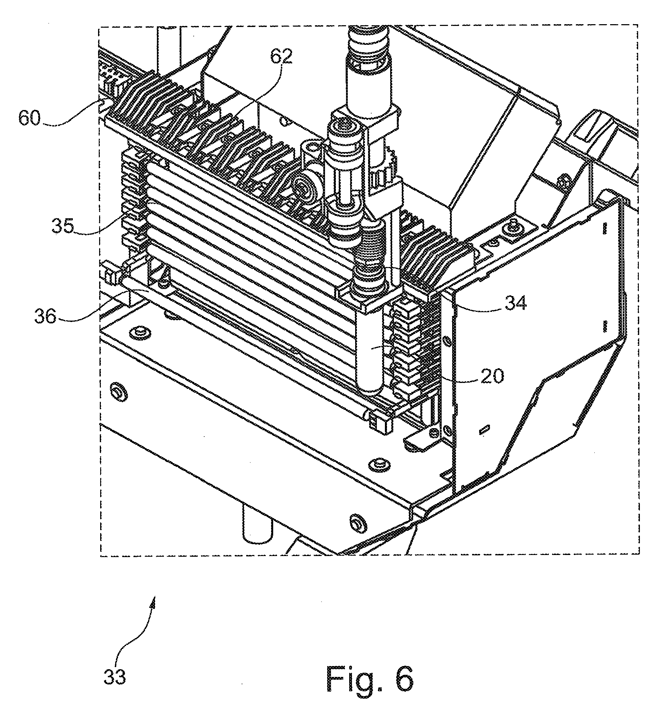

**Figur 4** und **Figur 5** zeigen verschiedene Ansichten eines Kühlschilds 60 mit einer Mehrzahl von Luftleitern 62, das der Abzweigung eines Kühlstroms 51 aus dem Mündungs- Kühlstrom 50 dient. **Figur 6** stellt einen Heizkasten 33 mit Kühlschild 60 dar. Über die Luftleiter 62 wird ein zumindest ein Teil des Mündungs- Kühlstroms 50 abgezweigt über den Öffnungsschlitz 64 nach unten gelenkt. Insbesondere wird der abgezweigte Kühlstrom 51 hinter die Infrarot- Strahler 35, d.h. zwischen Strahler 35 und Rückenreflektor 43 (nicht dargestellt) gelenkt.

Über die Anzahl der Luftleiter 62 kann die abgezweigte Luftmenge für den Strahler- Kühlmittelstrom 51 variiert werden. Die Luftleiter 62 können mechanisch oder elektronisch gesteuert geöffnet und / oder geschlossen werden. Vorzugsweise werden die Luftleiter gemeinsam gesteuert. Gemäß einer alternativen Ausführungsform kann jeder Luftleiter 62 individuell angesteuert werden.

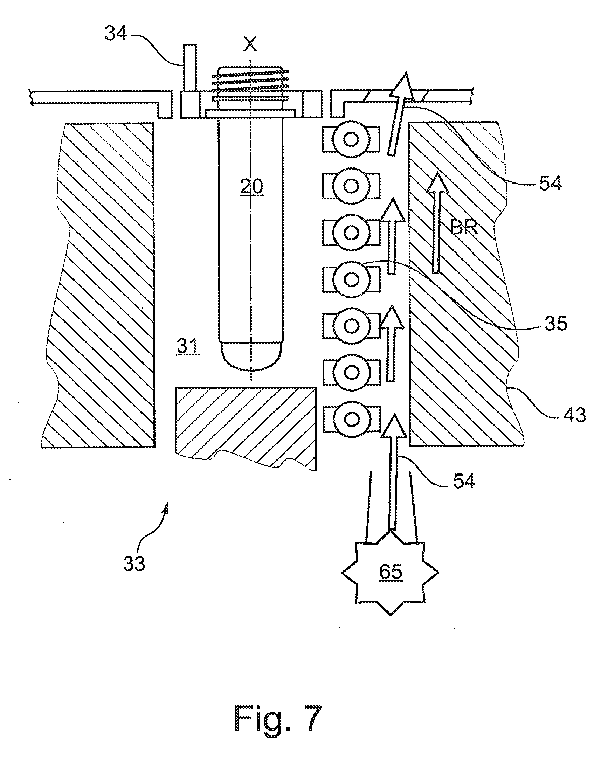

**Figur 7** zeigt eine zweite Ausführungsform einer Lampenkühlung. Hierbei wird zwischen den Lampenkolben 36 und dem Rückenreflektor 43 ein Strahler-Kühlmittelstrom 54 eingeblasen, der durch einen Kühlmittelerzeuger 65 generiert wird. Dieser Strahler- Kühlmittelstrom 54 hinterspült die Lampen 35 und kühlt sie dabei ab.

Der Strahler- Kühlmittelstrom 54 kann auf verschiedene Arten erzeugt werden. Als Kühlmittelerzeuger 65 dienen beispielsweise Ventilatoren, Gebläse, Drucklufterzeuger, Air Knife- Systeme usw.

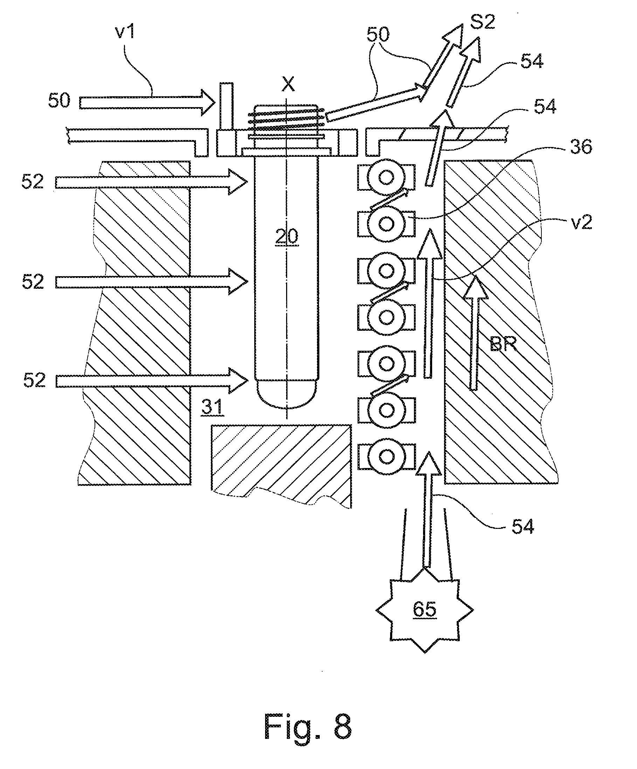

**Figur 8** stellt die Sogwirkung bei der zweiten Ausführungsform einer Lampenkühlung gemäß **Figur 7** dar.

Der Strahler- Kühlmittelstrom 54 strömt in Bewegungsrichtung BR parallel zur Längsachse X des Vorformlings 20 zwischen den Strahlern 35 und dem Rückenreflektor 43 in Richtung Mündung 22 des Vorformlings 20. Insbesondere strömt der Strahler- Kühlmittelstrom 54 innerhalb des Heizkastens 33 von unten nach oben und vereinigt sich mit dem Mündungs- Kühlmittelstrom 50. Vorzugsweise ist die Geschwindigkeit v1 des Mündungs- Kühlstroms 50 höher als die Geschwindigkeit v2 des Strahler- Kühlmittelstroms 54, so dass ein Sogeffekt S2 entsteht, der sich positiv auf die gesamte Luftführung auswirkt, da der Strahler- Kühlmittelstrom 54 hinter den Strahlern 35 hervorgezogen wird.

Dadurch kann auch der Vorformlings- Oberflächen- Kühlmittelstrom 52 auf einfache Weise aus der Heizgasse 31 abtransportiert werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuaszeichenliste

- 20: Vorformling
- 22: Mündungsbereich
- 30: Heizmodul / Ofen
- 30a: erste lineare Heizstrecke
- 30b: Umlenkbereich
- 30c: zweite lineare Heizstrecke
- 31: Heizgasse
- 33: Heizkasten
- 34: Halterung
- 35: IR- Strahler
- 36: Bodenstrahler
- 37: Schirmplatte
- 40: Freilegung / Öffnung
- 41: Gegenreflektor
- 42: Bodenreflektor
- 43: Rückenreflektor
- 46: Freilegung
- 50: Mündungs- Kühlstrom / erster Kühlmittelstrom
- 51: abgezweigter Kühlmittelstrom
- 52: Oberflächen- Kühlstrom
- 54: Strahler- Kühlmittelstrom / zweiter Kühlmittelstrom
- 60: Kühlschild
- 62: Luftleiter
- 64: Öffnungsschlitz
- 65: Kühlmittelerzeuger
- 110: Transportmittel
- 112: Sägezahnstern
- 114: Umlaufende Transportvorrichtung
- 116: Auslaufstern
- 120: Greifer / Halter
- 122: Transportkette

- BR: Bewegungsrichtung
- S1: Sog
- S2: Sog
- v1: Geschwindigkeit des ersten Kühlmittelstroms
- v2: Geschwindigkeit des zweiten Kühlmittelstroms
- X: Längsachse

## Patentansprüche

1. Verfahren zur Kühlung von IR- Strahlern (35) in einem Heizmodul (30) zur Erwärmung von Vorformlingen (20) vor der Verarbeitung in einer Streckblasvorrichtung, wobei an mindestens einer Seitenwand des Heizmoduls (30) parallel zur Transportrichtung der Vorformlinge (20) IR- Strahler (35) angeordnet sind, auf deren den Vorformlingen (20) abgewandten Seite sich mindestens ein Rückenreflektor (43) befindet, wobei die zu erwärmenden Vorformlinge (20) einen Mündungsbereich (22) und eine Längsachse (X) aufweisen und wobei der Mündungsbereich (22) der Vorformlinge (20) mit einem ersten Kühlmittelstrom (50) gekühlt wird, **dadurch gekennzeichnet, dass** zwischen den IR- Strahlern (35) und dem mindestens einen Rückenreflektor (43) ein zweiter vertikaler Kühlmittelstrom (51, 54) verläuft, der zumindest teilweise von dem ersten horizontal verlaufenden Kühlmittelstrom (50) gespeist und / oder mit diesem vereinigt wird, wobei der zweite Kühlmittelstrom (51, 54) parallel zur Längsachse (X) der Vorformlinge (20) verläuft.

2. Verfahren nach Anspruch 1, wobei der zweite Kühlmittelstrom (54) durch einen Kühlstromerzeuger (65) erzeugt wird, der so angeordnet ist, dass die Bewegungsrichtung (BR) des zweiten Kühlmittelstroms (54) parallel zur Längsachse (X) der Vorformlinge (20) in Richtung Mündungsbereich (22) der Vorformlinge (20) verläuft.

3. Verfahren nach Anspruch 2, wobei sich der erste und der zweite Kühlmittelstrom (50, 54) oberhalb der Anordnung der IR- Strahler (35) vereinigen.

4. Verfahren nach Anspruch 2 oder 3, wobei der erste Kühlmittelstrom (50) eine höhere Geschwindigkeit (v1) als der zweite Kühlmittelstrom (54, v2) aufweist.

5. Verfahren nach Anspruch 4, wobei sich aufgrund der unterschiedlichen Geschwindigkeiten (v1, v2) der beiden Kühlmittelströme (50, 54) ein Sog (S2) ausbildet.

6. Verfahren nach Anspruch 1, wobei der zweite Kühlmittelstrom (51) erzeugt wird, indem zumindest ein Teil des ersten Kühlmittelstroms (50) abgezweigt und so abgeleitet wird, dass dieser Teil antiparallel zur in Richtung Mündungsbereich (22) verlaufenden Längsachse (X) der Vorformlinge (20) zwischen den IR- Strahlern (35) und dem mindestens einen Rückenreflektor (43) verläuft, so dass die IR- Strahler (35) hinterspült werden.

7. Verfahren nach einem der voranstehenden Ansprüche, wobei die Enden und / oder die Kolben der IR- Strahler (35) gekühlt werden.

8. Heizmodul (30) zur Erwärmung von Vorformlingen vor der Verarbeitung in einer Streckblasvorrichtung, wobei das Heizmodul (30) eine Heizgasse (31) mit Transportmitteln für die Bewegung der Vorformlinge (20) entlang einer Transportstrecke aufweist und wobei sich an mindestens einer Seite der Transportstrecke IR-Strahler (35) und auf deren den Vorformlingen (20) abgewandten Seite sich mindestens ein Rückenreflektor (43) befindet, wobei das Heizmodul (30) mindestens ein Mittel zur Kühlung der IR- Strahler (35) aufweist, wobei in dem Heizmodul (30) Vorformlinge (20) erwärmt werden, die einen Mündungsbereich (22) und eine Längsachse (X) aufweisen und wobei das Heizmodul (30) Mittel zur Erzeugung eines ersten Kühlmittelstroms (50) zur Kühlung des Mündungsbereiches (22) der Vorformlinge (20) aufweist, **dadurch gekennzeichnet, dass** das Mittel zur Kühlung der IR- Strahler (35) ein Mittel zur Erzeugung eines vertikal zwischen den IR- Strahlern (35),und dem mindestens einen Rückenreflektor (43) verlaufenden zweiten vertikalen Kühlmittelstroms (51, 54) ist, der zumindest teilweise vom ersten horizontal verlaufenden Kühlmittelstrom (50) abteilbar und / oder mit diesem vereinigbar ist, wobei der zweite Kühlmittelstrom (51, 54) parallel zur Längsachse (X) der Vorformlinge (20) verläuft.

9. Heizmodul (30) nach Anspruch 8, wobei das Mittel zur Kühlung der IR- Strahler (35) ein Kühlschild (60) mit mindestens einem Luftleiter (62) und mindesten einem Öffnungsschlitz (64) ist.

10. Heizmodul (30) nach Anspruch 9, wobei das Kühlschild (60) so angeordnet ist, dass damit der erste Kühlmittelstrom (50) teilbar und zwischen den IR- Strahlern (35) und dem mindestens einen Rückenreflektor (43) ableitbar ist

11. Heizmodul (30) nach Anspruch 8, wobei das Mittel zur Kühlung der IR- Strahler (35) ein Kühlstromerzeuger (65) ist, der so angeordnet ist, dass der zweite Kühlmittelstrom (54) hinter den IR- Strahlern (35) und parallel zur in Richtung des Mündungsbereichs (22) der Vorformlinge (20) verlaufenden Längsachse (X) der Vorformlinge (20) hin einbringbar ist.

12. Heizmodul nach Anspruch 11, wobei der Kühlstromerzeuger (65) ein Ventilator, ein Gebläse oder ein Drucklufterzeuger ist.

13. Strahlerkühlung zur Verwendung in einem Heizmodul (30) zur Erwärmung von Vorformlingen vor der Verarbeitung in einer Streckblasvorrichtung, wobei das Heizmodul (30) eine Heizgasse (31) mit Transportmitteln für die Bewegung der Vorformlinge (20) entlang einer Transportstrecke aufweist und wobei sich an mindestens einer Seite der Transportstrecke IR- Strahler (35) und auf deren den Vorformlingen (20) abgewandten Seite sich mindestens ein Rückenreflektor (43) befindet, wobei das Heizmodul (30) mindestens ein Mittel zur Kühlung der IR-Strahler (35) aufweist, wobei in dem Heizmodul (30) Vorformlinge (20) erwärmt werden, die einen Mündungsbereich (22) und eine Längsachse (X) aufweisen und wobei das Heizmodul (30) Mittel zur Erzeugung eines ersten Kühlmittelstroms (50) zur Kühlung des Mündungsbereiches (22) der Vorformlinge (20) aufweist, **dadurch gekennzeichnet, dass** die Strahlerkühlung ein zwischen den IR Strahlern (35) und dem mindestens einen Rückenreflektor (43) angeordneter zweiter vertical verlaufenden Küntmittetstrom (51, 54) ist, wobei der zweite Kühlmittelstrom (51, 54) zumindest teilweise vom erstern horizontal verlanfenden Kühtmittetstrom (50) abteilbar und / oder mit diesem vereinigbar ist, wobei der zweite Kühlmittelstrom (51, 54) parallel zur Längsachse (X) der Vorformlinge (20) verläuft.

14. Strahlerkühlung nach Anspruch 13, wobei die Strahlerkühlung mittels eines Kühlschilds (60) von dem ersten Kühlmittelstrom (50) abtrennbar oder mit einem Kühlstromerzeuger (65) erzeugbar und mit dem ersten Kühlmittelstrom (50) vereinigbar ist.

## Claims

1. Method for cooling IR emitters (35) in a heating device (30) used for warming preforms (20) before processing the preforms (20) in a stretch blow molding device, whereby IR emitters (35) are arranged on at least one sidewall of the heating device (30) parallel to the transport direction of the preforms (20), whereby at least one back reflector (43) is arranged on the side of the IR emitters (35) averting the preforms (20), whereby the preforms (20) to be warmed comprise a mouth region (22) and a longitudinal axis (X) and whereby the mouth region (22) of the preforms (20) is cooled with a first coolant flow (50), **characterized in that** a second vertical coolant flow (51, 54) passes between the IR emitters (35) and the at least one back reflector(43), whereby this second coolant flow (51, 54) is at least partially branched off from the horizontal first coolant flow (50) and / or whereby this second coolant flow (51, 54) is united with the horizontal first coolant flow (50), whereby the second coolant flow (51, 54) runs parallel to the longitudinal axis (X) of the preforms (20).

2. Method according to claim 1, whereby the second coolant flow (54) is generated by a coolant producing device (65) that is arranged in such a way that the second coolant flow (54) generated thereby has a direction of movement (BX) that is parallel to the longitudinal axis (X) of the preforms (20) and runs towards the mouth region (22) of the preforms (20).

3. Method according to claim 2, whereby the first coolant flow and the second coolant flow (50, 54) are united above the arrangement of the IR emitters (35).

4. Method according to claim 2 or 3, whereby the first coolant flow (50) has a higher velocity (v1) than the second coolant flow (54, v2).

5. Method according to claim 4, whereby a suctional pull (S2) is formed because of the different velocities (v1, v2) of the two coolant flows (50, 54).

6. Method according to claim 1, whereby the second coolant flow (51) is generated by branching off and diverting at least a part of the first coolant flow (50) in such a way that this branched off part passes towards the mouth region (22) of the preforms (20) thereby running antiparallel to the longitudinal axis (X) of the preforms (20), whereby this second coolant flow (51) passes between the IR emitters (35) and the at least one back reflector (43) thereby flushing behind the back of the IR emitters (35).

7. Method according to one of the previous claims, whereby the ends and / or the bulbs of the IR emitters (35) are cooled.

8. Heating device (30) for warming preforms before processing the preforms in a stretch blow molding device, whereby the heating device (30) comprises a heating alley (31) with conveying means for the movement of the preforms (20) along a transport route, whereby IR emitters (35) are arranged on at least one side of the transport route, and whereby at least one back reflector (43) is arranged on the side of the IR emitters (35) averting the preforms (20), whereby the heating device (30) comprises at least one means for cooling the IR emitters (35), whereby the preforms (20) heated in the heating device (30) comprise a mouth region (22) and a longitudinal axis (X) and whereby the heating device (30) comprises means for the production of a first coolant flow (50) to cool the mouth region (22) of the preforms (20), **characterized in that** the means for cooling the IR emitters (35) is a means for the production of an vertical second coolant flow (51, 54), the vertical second coolant flow (51, 54) passes between the IR emitters (35) and the at least one back reflector (43), whereby this second coolant flow (51, 54) is at least partially separable from the horizontal first coolant flow (50) and / or whereby this second coolant flow (51, 54) is unitable with the horizontal first coolant flow (50), whereby the second coolant flow (51, 54) runs parallel to the longitudinal axis (X) of the preforms (20).

9. Heating device (30) according to claim 8, whereby the means for cooling the IR emitters (35) is a coolant plate (60) with at least one air conductor (62) and at least one opening slot (64).

10. Heating device (30) according to claim 9, whereby the coolant plate (60) is arranged in such a way that a part of the first coolant flow (50) is branched off and diverted, the branched off part passing between the IR emitters (35) and the at least one back reflector (43).

11. Heating device (30) according to claim 8, whereby the means for cooling the IR emitters (35) is a coolant producing device (65) arranged in such a way that the second coolant flow (54) produced thereby is introduced behind the IR emitters (35) and parallel to the longitudinal axis (X) of the preforms (20) flowing towards the mouth region (22) of the preforms (20).

12. Heating device according to claim 11, whereby the coolant producing device (65) is a fan, a blower or an air compressor.

13. Means for cooling of emitters for the use in a heating device (30) for warming preforms before processing the preforms in a stretch blow molding device, whereby the heating device (30) comprises a heating alley (31) with conveying means for the movement of the preforms (20) along a transport route, whereby IR emitters (35) are arranged on at least one side of the transport route, whereby at least one back reflector (43) is arranged on the side of the IR emitters (35) averting the preforms (20), whereby the heating device (30) comprises at least one means for cooling the IR emitters (35), whereby the preforms (20) warmed in the heating device (30) comprise a mouth region (22) and a longitudinal axis (X) and whereby the heating device (30) comprises means for the production of a first coolant flow (50) to cool the mouth region (22) of the preforms (20), **characterized in that** the means for cooling of emitters is a second vertical coolant flow (51, 54) passing between the IR emitters (35) and the at least one back reflector (43), whereby this second coolant flow (51, 54) is at least partially separable from the first horizontal coolant flow (50) and / or whereby this second coolant flow (51, 54) is unitable with the horizontal first coolant flow (50), whereby the second coolant flow (51, 54) runs parallel to the longitudinal axis (X) of the preforms (20).

14. Means for cooling of emitters according to claim 13, whereby the means for cooling of emitters are separable from a first coolant flow (50) by a coolant plate (60) or whereby the means for cooling of emitters are generated by a coolant producing device (65) and unitable with the first coolant flow (50)

## Revendications

1. Procédé de refroidissement de radiateurs aux rayons infrarouges (35) dans un module de chauffage (30) pour chauffer des préformes (20) avant le traitement dans un dispositif d'étirage-soufflage, dans lequel des radiateurs aux rayons infrarouges (35) sont disposés sur au moins une paroi latérale du module de chauffage (30), parallèlement à la direction de transport des préformes (20), et sur le côté de ceux-ci qui montre dans la direction opposée aux préformes (20) est situé au moins un réflecteur dorsal (43), les préformes (20) à chauffer présentant une zone de bouche (22) et un axe longitudinal (X) et ladite zone de bouche (22) des préformes (20) étant refroidie par un premier courant de réfrigérant (50), **caractérisé par le fait qu'**entre les radiateurs aux rayons infrarouges (35) et ledit au moins un réflecteur dorsal (43) passe un deuxième courant de réfrigérant (51, 54) vertical qui est alimenté au moins en partie par le premier courant de réfrigérant (50) passant horizontalement et/ou est réuni à celui-ci, ledit deuxième courant de réfrigérant (51, 54) passant parallèlement à l'axe longitudinal (X) des préformes (20).

2. Procédé selon la revendication 1, dans lequel le deuxième courant de réfrigérant (54) est généré par un générateur de courant de refroidissement (65) qui est disposé de manière à ce que la direction de déplacement (BR) du deuxième courant de réfrigérant (54) s'étende parallèlement à l'axe longitudinal (X) des préformes (20) en direction de la zone de bouche (22) des préformes (20).

3. Procédé selon la revendication 2, dans lequel les premier et deuxième courants de réfrigérant (50, 54) s'unissent au-dessus de l'ensemble des radiateurs aux rayons infrarouges (35).

4. Procédé selon la revendication 2 ou 3, dans lequel le premier courant de réfrigérant (50) présente une vitesse (v1) supérieure à celle du deuxième courant de réfrigérant (54, v2).

5. Procédé selon la revendication 4, dans lequel une aspiration (S2) est réalisée en raison des vitesses (v1, v2) différentes des deux courants de réfrigérant (50, 54).

6. Procédé selon la revendication 1, dans lequel le deuxième courant de réfrigérant (51) est généré en dérivant au moins une partie du premier courant de réfrigérant (50) et en déviant celle-ci de telle manière que cette partie passe antiparallèlement à l'axe longitudinal (X) des préformes (20), -qui s'étend vers la zone de bouche (22)-, entre les radiateurs aux rayons infrarouges (35) et ledit au moins un réflecteur dorsal (43), de sorte que les radiateurs aux rayons infrarouges (35) sont rincés de derrière.

7. Procédé selon l'une quelconque des revendications précédentes, dans lequel les extrémités et/ou les ampoules des radiateurs aux rayons infrarouges (35) sont refroidies.

8. Module de chauffage (30) pour chauffer des préformes avant le traitement dans un dispositif d'étirage-soufflage, ledit module de chauffage (30) présentant un couloir de chauffage (31) ayant des moyens de transport pour le déplacement des préformes (20) le long d'une section de transport, et sur au moins un côté de ladite section de transport étant situés des radiateurs aux rayons infrarouges (35) et sur le côté de ceux-ci qui montre dans la direction opposée aux préformes (20) étant situé au moins un réflecteur dorsal (43), ledit module de chauffage (30) présentant au moins un moyen de refroidissement des radiateurs aux rayons infrarouges (35), dans le module de chauffage (30) étant chauffés des préformes (20) qui présentent une zone de bouche (22) et un axe longitudinal (X), et ledit module de chauffage (30) comprenant des moyens de génération d'un premier courant de réfrigérant (50) destiné à refroidir ladite zone de bouche (22) des préformes (20), **caractérisé par le fait que** ledit moyen de refroidissement des radiateurs aux rayons infrarouges (35) est un moyen de génération d'un deuxième courant de réfrigérant (51, 54) vertical qui passe verticalement entre les radiateurs aux rayons infrarouges (35) et ledit au moins un réflecteur dorsal (43) et qui peut être séparé, au moins en partie, du premier courant de réfrigérant (50) passant horizontalement et/ou être réuni à celui-ci, le deuxième courant de réfrigérant (51, 54) passant parallèlement à l'axe longitudinal (X) des préformes (20).

9. Module de chauffage (30) selon la revendication 8, dans lequel le moyen de refroidissement des radiateurs aux rayons infrarouges (35) est un panneau de refroidissement (60) ayant au moins un conducteur d'air (62) et au moins une fente d'ouverture (64).

10. Module de chauffage (30) selon la revendication 9, dans lequel ledit panneau de refroidissement (60) est agencé de manière que le premier courant de réfrigérant (50) peut être divisé et être dévié entre les radiateurs aux rayons infrarouges (35) et ledit au moins un réflecteur dorsal (43).

11. Module de chauffage (30) selon la revendication 8, dans lequel le moyen de refroidissement des radiateurs aux rayons infrarouges (35) est un générateur de courant de refroidissement (65) qui est disposé de manière à ce que le deuxième courant de réfrigérant (54) puisse être introduit derrière les radiateurs aux rayons infrarouges (35) et parallèlement à l'axe longitudinal (X) des préformes (20), qui s'étend en direction de la zone de bouche (22) des préformes (20).

12. Module de chauffage selon la revendication 11, dans lequel le générateur de courant de refroidissement (65) est un ventilateur, une soufflante ou un générateur d'air comprimé.

13. Refroidissement de radiateur, destiné à être utilisé dans un module de chauffage (30) pour chauffer des préformes avant le traitement dans un dispositif d'étirage-soufflage, ledit module de chauffage (30) présentant un couloir de chauffage (31) ayant des moyens de transport pour le déplacement des préformes (20) le long d'une section de transport, et sur au moins un côté de ladite section de transport étant situés des radiateurs aux rayons infrarouges (35) et sur le côté de ceux-ci qui montre dans la direction opposée aux préformes (20) étant situé au moins un réflecteur dorsal (43), ledit module de chauffage (30) présentant au moins un moyen de refroidissement des radiateurs aux rayons infrarouges (35), dans le module de chauffage (30) étant chauffés des préformes (20) qui présentent une zone de bouche (22) et un axe longitudinal (X), et ledit module de chauffage (30) comprenant des moyens de génération d'un premier courant de réfrigérant (50) destiné à refroidir ladite zone de bouche (22) des préformes (20), **caractérisé par le fait que** le refroidissement de radiateur est un deuxième courant de réfrigérant (51, 54) passant verticalement disposé entre les radiateurs aux rayons infrarouges (35) et ledit au moins un réflecteur dorsal (43), ledit deuxième courant de réfrigérant (51, 54) pouvant être séparé, au moins en partie, du premier courant de réfrigérant (50) passant horizontalement et/ou pouvant être réuni à celui-ci, le deuxième courant de réfrigérant (51, 54) passant parallèlement à l'axe longitudinal (X) des préformes (20).

14. Refroidissement de radiateur selon la revendication 13, dans lequel le refroidissement de radiateur peut être séparé du premier courant de réfrigérant (50) au moyen d'un panneau de refroidissement (60) ou être généré par un générateur de courant de refroidissement (65) et être réuni au premier courant de réfrigérant (50).
